# EUROPÄISCHE PATENTSCHRIFT

(11) **EP 2 688 249 B1**
(45) Veröffentlichungstag und Bekanntmachung des Hinweises auf die Patenterteilung: **27.04.2016**
(21) Anmeldenummer: 12177233.9
(22) Anmeldetag: 20.07.2012
(51) Int. Cl.: H04L 12/42, H04L 12/46, H04L 12/703, H04L 12/753, H04L 12/403, H04L 12/781

(54) **Verfahren zur Nachrichtenübermittlung in einem redundant betreibbaren industriellen Kommunikationsnetz und Kommunikationsgerät für ein redundant betreibbares industrielles Kommunikationsnetz**
Method for message transmission in a redundant industrial communication network and communication device for a redundant industrial communication network
Procédé de transmission de nouvelles dans un réseau de communication industriel pouvant fonctionner de manière redondante et appareil de communication pour un réseau de communication industriel pouvant fonctionner de manière redondante

(43) Veröffentlichungstag der Anmeldung: 22.01.2014
(73) Patentinhaber: Siemens Aktiengesellschaft, 80333 München (DE)
(72) Erfinder: Kießling, Marcel, 90556 Cadolzburg (DE)

(56) Entgegenhaltungen:
- EP-A1- 2 020 774
- DE-A1-102007 015 539
- US-A1- 2009 109 841

## Beschreibung

Ein industrielles Automatisierungssystem umfaßt üblicherweise eine Vielzahl von über ein industrielles Kommunikationsnetz miteinander vernetzten Automatisierungsgeräten und dient im Rahmen einer Fertigungs- oder Prozeßautomatisierung zur Steuerung oder Regelung von Anlagen, Maschinen bzw. Geräten. Aufgrund zeitkritischer Rahmenbedingungen in mittels industrieller Automatisierungssysteme automatisierten technischen Systemen werden in industriellen Kommunikationsnetzen zur Kommunikation zwischen Automatisierungsgeräten überwiegend Echzeit-Kommunikationsprotokolle, wie Profinet, Profibus oder Real-Time-Ethernet, verwendet.

Unterbrechungen von Kommunikationsverbindungen zwischen Rechnereinheiten eines industriellen Automatisierungssystems oder Automatisierungsgeräten können zu einer unerwünschten oder unnötigen Wiederholung einer Übermittlung einer Dienstanforderung führen. Dies verursacht eine zusätzliche Auslastung von Kommunikationsverbindungen des industriellen Automatisierungssystems, was zu weiteren Systemstörungen oder -fehlern führen kann. Außerdem können nicht oder nicht vollständig übermittelte Nachrichten beispielsweise einen Übergang oder Verbleib eines industriellen Automatisierungssystems in einen sicheren Betriebszustand verhindern. Dies kann schließlich zu einem Ausfall einer kompletten Produktionsanlage und einem kostspieligen Produktionsstillstand führen. Eine besondere Problematik resultiert in industriellen Automatisierungssystemen regelmäßig aus einem Meldungsverkehr mit verhältnismäßig vielen, aber relativ kurzen Nachrichten, wodurch obige Probleme verstärkt werden.

Aus WO 2008/119649 A1 ist ein Verfahren zum Rekonfigurieren eines paketvermittelten Kommunikationsnetzes bekannt, das ein erstes Teilnetz und ein zweites Teilnetz umfaßt. Während im ersten Teilnetz ein erstes Netzprotokoll verwendet wird, wird im zweiten Teilnetz ein vom ersten Netzprotokoll verschiedenes zweites Netzprotokoll verwendet. Beide Teilnetze sind durch wenigstens drei redundante Datenlinks miteinander verbunden, von denen jeweils nur einer zum Nutzdatenaustausch aktiviert ist. Dabei ist ein Master-Datenlink voreingestellt aktiviert, während mindestens zwei Slave-Datenlinks voreingestellt inaktiviert sind. Durch eine mit dem Master-Datenlink verbundene Master-Brücke des zweiten Teilnetzes wird ein Ausfall des Master-Datenlinks oder eines Slave-Datenlinks überwacht. Bei einem solchen Ausfall generiert die Master-Brücke ein erstes Datenpaket und überträgt dies an eine mit einem Slave-Datenlink verbundene Slave-Brücke des zweiten Teilnetzes. Die Slave-Brücke wird gemäß einer vorgebbaren Auswahlregel durch die Master-Brücke ausgewählt. Anschließend wird das erste Datenpaket durch die gewählte Slave-Brücke verarbeitet. Das erste Datenpaket umfaßt logische Informationen, anhand derer eine zumindest teilweise Ausführung des ersten Netzprotokolls auf einem mit dem Slave-Datenlink verbundenen Port der Slave-Brücke und eine Aktivierung des Slave-Datenlinks durch das auf dem Port der Slave-Brücke ausgeführte erste Netzprotokoll erfolgt.

In EP 2 343 857 A1 ist ein Netzknoten für ein Kommunikationsnetz beschrieben, das ein erstes Teilnetz und ein mit diesem verbundenes zweites Teilnetz umfaßt. Während im ersten Teilnetz ein Spannbaum-Protokoll verwendet wird, wird im zweiten Teilnetz ein sich vom Protokoll des ersten Teilnetzes unterscheidendes zweites Protokoll verwendet. Der Netzknoten ist als ein Element für das zweite Teilnetz eingerichtet und zur Kommunikation innerhalb des zweiten Teilnetzes ausgebildet. Darüber hinaus ist der Netzknoten mittels einer Spannbaum-Funktionalität als ein Spannbaum-Hauptknoten zur Überwachung und Steuerung des zweiten Teilnetzes ausgebildet und eingerichtet. Damit kann das zweite Teilnetz vom im ersten Teilnetz verwendeten Spannbaum-Protokoll als ein virtueller Netzknoten behandelt werden, indem der Netzknoten als Spannbaum-Hauptknoten für andere Netzknoten des zweiten Teilnetzes eine Spannbaum-Protokoll-Anwendung vornimmt.

Aus WO 2010/105828 A1 ist ein Verfahren zum Betreiben eines Kommunikationsnetzes mit Redudanz-Eigenschaften bekannt, das eine Ring-Netztopologie aufweist. Innerhalb des Kommunikationsnetzes sind Kommunikationsgeräte mit ihren Datenports über Datenleitungen miteinander verbunden und tauschen auf Basis von Kommunikationsprotokollen Steuerungsdaten sowie Nutzdaten über die Datenleitungen aus. Um ein endloses Kreisen von Nachrichten in Maschen des Kommunikationsnetzes zu vermeiden, wird mittels der Kommunikationsprotokolle eine Übermittlung von Nachrichten über ausgewählte Datenports einzelner Kommunikationsgeräte mit Ausnahme von Nachrichten zur Steuerung bzw. Überwachung von Medienredundanz unterbunden. Innerhalb des Kommunikationsnetzes werden zwei unterschiedliche Kommunikationsprotokolle parallel zueinander in den Kommunikationsgeräten angewendet. Eine parallele Anwendung der unterschiedliche Kommunikationsprotokolle wird beispielsweise dadurch erzielt, eine Kontrolle über zu blockierende Datenports einem einzelnen Kommunikationsprotokoll zugewiesen wird. Alternativ dazu können für die Kommunikationsprotokolle derart Parameter gewählt werden, daß durch ein erstes Kommunikationsprotokoll keine Verbindungen blockiert werden, die entsprechend einem zweiten Kommunikationsprotokoll als aktiv gelten.

DE 10 2007 015 539 A1 offenbart ein Verfahren zum Rekonfigurieren eines Kommunikationsnetzwerks bestehend aus einem ersten Teilnetz mit Baumtopologie und einem zweiten Teilnetz mit Ringtopologie.

Der vorliegenden Erfindung liegt die Aufgabe zugrunde, ein Verfahren zur Nachrichtenübermittlung in einem redundant betreibbaren industriellen Kommunikationsnetz mit zumindest zwei Teilnetzen anzugeben, das bei Verwendung von zumindest zwei unterschiedlichen Kommunikationsprotokollen eine schnelle Aktivierung von Ersatz-Verbindungen nach Geräte- oder Verbindungsausfällen ermöglicht, sowie ein zur Durchführung des Verfahrens geeignetes Kommunikationsgerät zu schaffen.

Diese Aufgabe wird erfindungsgemäß durch ein Verfahren mit den in Anspruch 1 angegebenen Merkmalen sowie durch ein Kommunikationsgerät mit den in Anspruch 13 angegebenen Merkmalen gelöst. Vorteilhafte Weiterbildungen der vorliegenden Erfindung sind in den abhängigen Ansprüchen angegeben. Entsprechend dem erfindungsgemäßen Verfahren werden Nachrichten in einem ersten Teilnetz mit Baumtopologie entsprechend einem Spannbaum-Protokoll übermittelt. Dabei tauschen Netzknoten des ersten Teilnetzes zugeordnete Kommunikationsgeräte zur Bildung einer Baumtopologie untereinander Nachrichten mit Topologieinformationen aus. Anhand der ausgetauschten Topologieinformationen wird ein Wurzel-Netzknoten als Basiselement einer Baumtopologie durch die den Netzknoten des ersten Teilnetzes zugeordneten Kommunikationsgeräte ermittelt. Vom Wurzel-Netzknoten ausgehend werden schleifenfreie Verbindungen zu den übrigen Netzknoten des ersten Teilnetzes aufgebaut. In einem zweiten Teilnetz werden Nachrichten entsprechend einem Parallel- oder Ringredundanz-Protokoll übermittelt. Das erste und zweite Teilnetz sind über eine Mehrzahl von Kommunikationsgeräten miteinander gekoppelt. Die den Netzknoten des ersten bzw. zweiten Teilnetzes zugeordneten Kommunikationsgeräte sind vorzugsweise Switches oder Bridges. Netzknoten des zweiten Teilnetzes zugeordnete Kommunikationsgeräte tauschen untereinander Nachrichten mit Topologieinformationen des ersten Teilnetzes untereinander entsprechend dem Parallel- oder Ringredundanz-Protokoll aus und vergleichen diese mit lokal vorliegenden Topologieinformationen des ersten Teilnetzes. In Abhängigkeit von einem Vergleichsergebnis ermitteln die Netzknoten des zweiten Teilnetzes zugeordneten Kommunikationsgeräte resultierende Topologieinformationen des ersten Teilnetzes. Außerdem passen die den Netzknoten des zweiten Teilnetzes zugeordneten Kommunikationsgeräte anhand der ermittelten resultierenden Topologieinformationen des ersten Teilnetzes ihre Konfiguration hinsichtlich geschlossener bzw. geöffneter Verbindungen zum ersten Teilnetz an.

Im Gegensatz zu bisherigen Ansätzen erfolgt innerhalb des zweiten Teilnetzes erfindungsgemäß keine parallele Anwendung eines Spannbaum-Protokolls und eines Parallel- oder Ringredundanz-Protokolls. Vorzugsweise werden Nachrichten zwischen den Netzknoten des zweiten Teilnetzes zugeordneten Kommunikationsgeräten ausschließlich entsprechend dem Parallel- oder Ringredundanz-Protokoll übermittelt. Somit muß für das zweite Teilnetz keine Baumtopologie mittels eines Spannbaum-Protokolls gebildet werden. Dies trägt entscheidend zu einer schnellen Aktivierung von Ersatz-Verbindungen nach Geräte- oder Verbindungsausfällen bei. Darüber hinaus werden das Spannbaum-Protokoll und das Parallel- oder Ringredundanz-Protokoll im jeweiligen Teilnetz im wesentlichen entkoppelt voneinander angewendet. Vorzugsweise wird das zweite Teilnetz für eine Anwendung des Spannbaum-Protokolls im ersten Teilnetz durch ein einzelnes Netzknoten miteinander verbindendes Kommunikationsgerät im ersten Teilnetz repräsentiert. Insgesamt erscheint eine Anwendung des Spannbaum-Protokolls im ersten Teilnetz für Kommunikationsgeräte im zweiten Teilnetz und umgekehrt transparent. Erzielt wird eine derartige Entkopplung durch eine Tunnelung von Topologieinformationen des ersten Teilnetzes durch das zweite Teilnetz sowie durch einen Abgleich der Topologieinformationen zu resultierenden Topologieinformationen im Sinn einer Ableitung bester Informationen. Diese resultierenden Topologieinformationen sind wiederum für eine Anwendung des Spannbaum-Protokolls im ersten Teilnetz nutzbar.

Darüber hinaus werden die resultierenden Topologieinformationen des ersten Teilnetzes erfindungsgemäß durch sämtliche den Netzknoten des zweiten Teilnetzes zugeordnete Kommunikationsgeräte einheitlich ermittelt. Dabei werden die resultierenden Topologieinformationen für Netzknoten des ersten Teilnetzes zugeordnete Kommunikationsgeräte zur Anwendung des Spannbaum-Protokolls im ersten Teilnetz bereitgestellt.

Entsprechend einer bevorzugten Ausgestaltung des erfindungsgemäßen Verfahrens umfassen die Topologieinformationen des ersten Teilnetzes Angaben zu bestehenden Verbindungen zwischen Netzknoten des ersten Teilnetzes, und vom Wurzel-Netzknoten ausgehende schleifenfreie Verbindungen zu den übrigen Netzknoten des ersten Teilnetzes werden anhand einer Ermittlung minimaler Pfadkosten zum Wurzel-Netzknoten aufgebaut.

Beim Spannbaum-Protokoll kann es sich beispielsweise um das Spanning Tree Protocol entsprechend IEEE 802.1d, Rapid Spanning Tree Protocol entsprechend IEEE 802.1w oder Multiple Spanning Tree Protocol entsprechend IEEE 802.1s handeln. Die Nachrichten mit Topologieinformationen des ersten Teilnetzes sind vorzugsweise Bridge Protocol Data Units (BPDU), die beispielsweise jeweils einen Port Priority Vector umfassen können, der unter den Netzknoten des zweiten Teilnetzes zugeordneten Kommunikationsgeräten ausgetauscht und abgeglichen wird.

Das Parallel- oder Ringredundanz-Protokoll ist beispielsweise das Parallel Redundancy Protocol entsprechend IEC 62439-3, Clause 4, High-availability Seamless Redundancy-Protokoll entsprechend IEC 62439-3, Clause 5 oder Media Redundancy Protocol entsprechend IEC 62439. Bei Verwendung des High-availability Seamless Redundancy-Protokolls als Ringredundanz-Protokoll umfassen die den Netzknoten des zweiten Teilnetzes zugeordneten Kommunikationsgeräte vorzugsweise jeweils zumindest eine erste und eine zweite Sende- und Empfangseinheit, die jeweils eine Schnittstelle für eine Netzverbindung des zweiten Teilnetzes aufweisen. Das zweite Teilnetz weist in diesem Fall eine Ringtopologie auf. Des weiteren weisen beide Sende- und Empfangseinheiten eine identische Netzadresse und vorzugsweise einen identischen Geräteidentifikator auf. Zudem ist mit den ersten und zweiten Sende- und Empfangseinheiten vorteilhafterweise jeweils eine Signalverarbeitungseinheit verbunden ist, die zu sendende Nachrichten parallel an beide Sendeeinheiten weiterleitet und von den Empfangseinheiten empfangene redundante Nachrichten detektiert. Darüber hinaus ist mit den Signalverarbeitungseinheiten vorzugsweise jeweils ein Koppelelement verbunden, über das ein einfach angebundener Netzknoten oder ein redundanzfreies Teilnetz mit der Signalverarbeitungseinheit verbunden ist. Entsprechend einer weiteren Ausgestaltung des erfindungsgemäßen Verfahrens werden zueinander redundante Nachrichten durch eine einheitliche Sequenznummer gekennzeichnet, wobei in einer der Signalverarbeitungseinheit zugeordneten Speichereinheit Sequenznummern von bereits fehlerfrei empfangenen Nachrichten gespeichert werden. Die Signalverarbeitungseinheit kann somit bei Empfang einer neuen Nachricht dessen Sequenznummer auf Übereinstimmung mit einer bereits gespeicherten Sequenznummer überprüfen.

Bei Verwendung des Media Redundancy Protocol als Ringredundanz-Protokoll entsprechend einer weiteren vorteilhaften Ausgestaltung der vorliegenden Erfindung ist im zweiten Teilnetz ein Kommunikationsgerät als Überwachungs- und Steuerungseinheit konfiguriert. Das zweite Teilnetz weist in diesem Fall eine Ringtopologie auf. Die Überwachungs- und Steuerungseinheit detektiert eine Unterbrechung innerhalb der Ringtopologie anhand versendeter Test-Datenpakete und steuert eine Weiterleitung von Datenpaketen mit Nutzdaten, die an einen ersten Anschluß des als Überwachungs- und Steuerungseinheit konfigurierten Kommunikationsgeräts gerichtet sind, an einen zweiten Anschluß dieses Kommunikationsgeräts.

Das erfindungsgemäße Kommunikationsgerät ist für ein redundant betreibbares industrielles Kommunikationsnetz vorgesehen und geeignet, das ein erstes Teilnetz mit Baumtopologie sowie Nachrichtenübermittlung entsprechend einem Spannbaum-Protokoll, ein zweites Teilnetz sowie Nachrichtenübermittlung entsprechend einem Parallel- oder Ringredundanz-Protokoll und eine Mehrzahl beide Teilnetze koppelnder Kommunikationsgeräte umfaßt. Als Mittel zur Nachrichtenübermittlung innerhalb des zweiten Teilnetzes entsprechend dem Parallel- oder Ringredundanz-Protokoll sind beispielsweise eine erste und zweite Sende- und Empfangseinheit, eine Signalverarbeitungseinheit mit einer Multiplexereinheit und einer Redundanzbehandlungseinheit sowie ein mit der Signalverarbeitungseinheit verbundenes Koppelelement vorgesehen. Das Koppelelement ist vorzugsweise ein Hochgeschwindigkeitsbus, über den beispielsweise einfach angebundene Netzknoten oder redundanzfreie Teilnetze mit der Signalverarbeitungseinheit verbunden sein können. Insbesondere kann das Koppelelement ein Backplane Switch mit zugeordnetem Controller sein. Alternativ hierzu kann das Koppelelement grundsätzlich auch mittels eines Matrix-Schaltnetzes realisiert sein. Die Signalverarbeitungseinheit ist vorzugsweise mittels eines Field Programmable Gate Arrays (FPGA) realisiert.

Des weiteren umfaßt das erfindungsgemäße Kommunikationsgerät Mittel zum Austauschen von Nachrichten mit Topologieinformationen des ersten Teilnetzes mit Netzknoten des zweiten Teilnetzes zugeordneten weiteren Kommunikationsgeräten entsprechend dem Parallel- oder Ringredundanz-Protokoll. Diese Mittel können beispielsweise durch die erste und zweite Sende- und Empfangseinheit, die Signalverarbeitungseinheit, das Koppelelement und einen der Signalverarbeitungseinheit zugeordneten Protokoll-Wrapper realisiert sein. Erfindungsgemäß sind die Topologieinformationen für eine Ermittlung eines Wurzel-Netzknotens als Basiselement der Baumtopologie vorgesehen. Dabei bildet der Wurzel-Netzknoten einen Ausgangspunkt für einen Aufbau schleifenfreier Verbindungen zu den übrigen Netzknoten des ersten Teilnetzes. Zusätzlich sind Mittel zum Vergleichen von ausgetauschten Nachrichten mit Topologieinformationen des ersten Teilnetzes mit lokal vorliegenden Topologieinformationen des ersten Teilnetzes und zum Ermitteln von resultierenden Topologieinformationen des ersten Teilnetzes in Abhängigkeit von einem Vergleichsergebnis vorgesehen. Diese Mittel können beispielsweise durch die Signalverarbeitungseinheit realisiert sein.

Darüber hinaus umfaßt das erfindungsgemäße Kommunikationsgerät Mittel zu seiner Konfigurationsanpassung hinsichtlich geschlossener bzw. geöffneter Verbindungen zum ersten Teilnetz anhand der ermittelten resultierenden Topologieinformationen des ersten Teilnetzes. Diese Mittel können beispielsweise durch einen Controller des Koppelelements realisiert sein. Vorzugsweise ist das erfindungsgemäße Kommunikationsgerät für eine Nachrichtübermittlung innerhalb des zweiten Teilnetzes ausschließlich entsprechend dem Parallel- oder Ringredundanz-Protokoll eingerichtet. Daher können das Spannbaum-Protokoll und das Parallel- oder Ringredundanz-Protokoll im jeweiligen Teilnetz im wesentlichen entkoppelt voneinander angewendet werden. Dies ermöglicht deutlich reduzierte Recovery-Zeiten nach Geräte- oder Verbindungsausfällen.

Das Parallel- oder Ringredundanz-Protokoll kann beispielsweise das Parallel Redundancy Protocol, High-availability Seamless Redundancy-Protokoll oder Media Redundancy Protocol sein. Handelt es sich beim Ringredundanz-Protokoll um das High-availability Seamless Redundancy-Protokoll, umfassen die den Netzknoten des zweiten Teilnetzes zugeordneten Kommunikationsgeräte vorzugsweise jeweils zumindest eine erste und eine zweite Sende- und Empfangseinheit, die jeweils eine Schnittstelle für eine Netzverbindung des zweiten Teilnetzes aufweisen. Das zweite Teilnetz weist in diesem Fall eine Ringtopologie auf. Außerdem weisen beide Sende- und Empfangseinheiten eine identische Netzadresse und einen identischen Geräteidentifikator auf. Bevorzugt ist mit der ersten und zweiten Sende- und Empfangseinheit eine Signalverarbeitungseinheit verbunden, die eine Multiplexereinheit zur parallelen Weiterleitung zu sendender Nachrichten an beide Sendeeinheiten und eine Redundanzbehandlungseinheit zur Verarbeitung von beiden Empfangseinheiten empfangener Nachrichten umfaßt. Zusätzlich weist die Redundanzbehandlungseinheit vorzugsweise eine Filtereinheit auf, die für eine Detektion empfangener redundanter Nachrichten eingerichtet ist. Ferner kann mit der Signalverarbeitungseinheit ein Koppelelement verbunden sein, über das beispielsweise ein einfach angebundener Netzknoten oder ein redundanzfreies Teilnetz mit der Signalverarbeitungseinheit verbunden ist.

Entsprechend einer weiteren Ausgestaltung des erfindungsgemäßen Kommunikationsgeräts sind zueinander redundante Nachrichten durch eine einheitliche Sequenznummer gekennzeichnet. Dabei ist der Signalverarbeitungseinheit vorzugsweise eine Speichereinheit zugeordnet, die für eine Speicherung von Sequenznummern bereits fehlerfrei empfangener Nachrichten eingerichtet ist. Vorteilhafterweise ist die Redundanzbehandlungseinheit für eine Überprüfung auf eine bereits gespeicherte Sequenznummer bei Empfang einer neuen Nachricht eingerichtet.

Die vorliegende Erfindung wird nachfolgend an einem Ausführungsbeispiel anhand der Zeichnung näher erläutert. Es zeigt
- Figur 1: ein redundant betreibbares industrielles Kommunikationsnetz, das ein erstes Teilnetz mit Baumtopologie und ein zweites Teilnetz mit Ringtopologie umfaßt, in einem fehlerfreien Verbindungszustand,
- Figur 2: das Kommunikationsnetz gemäß Figur 1 in einem Zustand mit einem Verbindungsfehler im zweiten Teilnetz,
- Figur 3: das Kommunikationsnetz gemäß Figur 1 in einem Zustand mit einem Verbindungsfehler im ersten Teilnetz,
- Figur 4: ein Kommunikationsgerät, das einem Netzknoten des zweiten Teilnetzes zugeordnet ist,
- Figur 5: ein Kommunikationsgerät, das einem Netzknoten eines Teilnetzes zugeordnet ist, in dem ein ParallelRedundanzprotokoll verwendet wird.

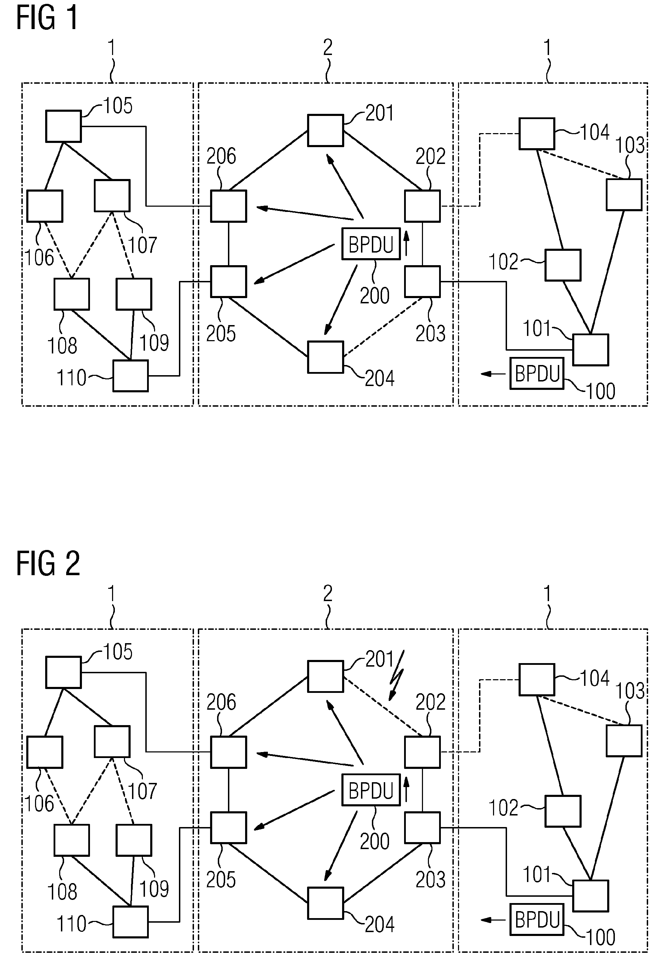

Das in Figur 1 dargestellte industrielle Kommunikationsnetz umfaßt ein erstes Teilnetz 1 mit Baumtopologie sowie Nachrichtenübermittlung entsprechend einem Spannbaum-Protokoll und ein zweites Teilnetz 2 mit Ringtopologie sowie Nachrichtenübermittlung entsprechend einem Ringredundanz-Protokoll. Nachrichten zwischen Netzknoten des zweiten Teilnetzes 2 zugeordneten Kommunikationsgeräten 201-206 werden ausschließlich entsprechend dem Ringredundanz-Protokoll übermittelt.

Das erste 1 und zweite Teilnetz 2 sind über eine Mehrzahl von Kommunikationsgeräten 101, 104, 105, 110, 202, 203, 205, 206 miteinander gekoppelt. Zur Vermeidung unerwünschter Schleifenverbindungen sind im vorliegenden Ausführungsbeispiel nur drei Verbindungen zwischen den Kommunikationsgeräten 101, 104, 105, 110, 202, 203, 205, 206 aktiviert. Deaktivierte Verbindungen sind in den Figuren durch gestrichelte Linien repräsentiert, während durchgezogene Linien aktivierte Verbindungen symbolisieren. Dies gilt für beide Teilnetze 1, 2.

Netzknoten des ersten Teilnetzes 1 zugeordnete Kommunikationsgeräte 101-110 tauschen zur Bildung einer Baumtopologie untereinander Nachrichten 100 mit Topologieinformationen aus und ermitteln anhand der ausgetauschten Topologieinformationen einen Wurzel-Netzknoten als Basiselement einer Baumtopologie. Das Spannbaum-Protokoll ist im vorliegenden Ausführungsbeispiel das Rapid Spanning Tree Protocol. Nachstehende Ausführungen gelten aber gleichermaßen für das Spanning Tree Protocol, das Multiple Spanning Tree Protocol oder vergleichbare Spannbaum-Protokolle. Im vorliegenden Ausführungsbeispiel ist der dem Kommunikationsgerät 101 zugeordnete Netzknoten anhand von Knotenidentifikator und zugeordneter Priorität entsprechend dem Rapid Spanning Tree Protocol als Wurzel-Netzknoten bestimmt worden. Das Kommunikationsgerät 101 stellt somit eine Root Bridge dar. Die unter den Kommunikationsgeräten 101-110 des ersten Teilnetzes 1 ausgetauschten Nachrichten 100 mit Topologieinformationen des ersten Teilnetzes 1 können beispielsweise Bridge Protocol Data Units (BPDU) sein, mittels derer die Kommunikationsgeräte 101-110 des ersten Teilnetzes 1 ihre Portzustände konfigurieren. Durch eine Konfiguration der Portzustände werden insbesondere Verbindungen zwischen Netzknoten aktiviert bzw. deaktiviert.

Ausgehend vom Wurzel-Netzknoten werden schleifenfreie Verbindungen zu den übrigen Netzknoten des ersten Teilnetzes 1 aufgebaut. Dies gilt auch für Transitverbindungen durch das zweite Teilnetz 2 mit Ringtopologie. Hierzu tauschen Netzknoten des zweiten Teilnetzes 2 zugeordnete Kommunikationsgeräte 201-206 untereinander Nachrichten 200 mit Topologieinformationen des ersten Teilnetzes 1 untereinander entsprechend dem Ringredundanz-Protokoll aus und vergleichen diese mit lokal vorliegenden Topologieinformationen des ersten Teilnetzes. Die zwischen den Kommunikationsgeräten 201-206 des zweiten Teilnetzes 2 ausgetauschten Nachrichten 200 mit Topologieinformationen des ersten Teilnetzes 1 umfassen im vorliegenden Ausführungsbeispiel jeweils einen Port Priority Vector, aus dessen Abgleich sämtliche Kommunikationsgeräte 201-206 in Abhängigkeit von einem Vergleichsergebnis einen Root Priority Vector als resultierende Topologieinformationen des ersten Teilnetzes 1 einheitlich ermitteln. Anhand der ermittelten resultierenden Topologieinformationen des ersten Teilnetzes 1 passen die den Netzknoten des zweiten Teilnetzes 2 zugeordneten Kommunikationsgeräte 201-206 ihre Konfiguration hinsichtlich geschlossener bzw. geöffneter Verbindungen zum ersten Teilnetz 1 an. Die den Netzknoten des ersten 1 und zweiten Teilnetzes 2 zugeordneten Kommunikationsgeräte 101-110, 201-206 sind im vorliegenden Ausführungsbeispiel Switches oder Bridges.

Die durch die Kommunikationsgeräte 201-206 des zweiten Teilnetzes 2 einheitlich ermittelten resultierenden Topologieinformationen des ersten Teilnetzes 1 werden auch den Kommunikationsgeräten 101-110 des ersten Teilnetzes 1 zur Anwendung des Spannbaum-Protokolls im ersten Teilnetz 1 bereitgestellt. Damit kann das zweite Teilnetz 2 für eine Anwendung des Spannbaum-Protokolls im ersten Teilnetz 1 durch ein einzelnes Netzknoten miteinander verbindendes Kommunikationsgerät, insbesondere durch eine funktionale RSTP-Bridge, im ersten Teilnetz 1 repräsentiert werden. Daher sind die Transitverbindungen durch das zweite Teilnetz 2 für die Kommunikationsgeräte des ersten Teilnetzes 1 transparent.

Die Topologieinformationen des ersten Teilnetzes 1 umfassen insbesondere Angaben zu bestehenden Verbindungen zwischen Netzknoten des ersten Teilnetzes 1 und deren Pfadkosten. Anhand einer Ermittlung minimaler Pfadkosten zum Wurzel-Netzknoten bauen die Kommunikationsgeräte 101-110 des ersten Teilnetzes autonom-interagierend vom Wurzel-Netzknoten ausgehende schleifenfreie Verbindungen zu den übrigen Netzknoten des ersten Teilnetzes 1 auf. Nähere Einzelheiten hierzu sind in bezug auf das Rapid Spanning Tree Protocol beispielsweise IEEE 802.1w zu entnehmen.

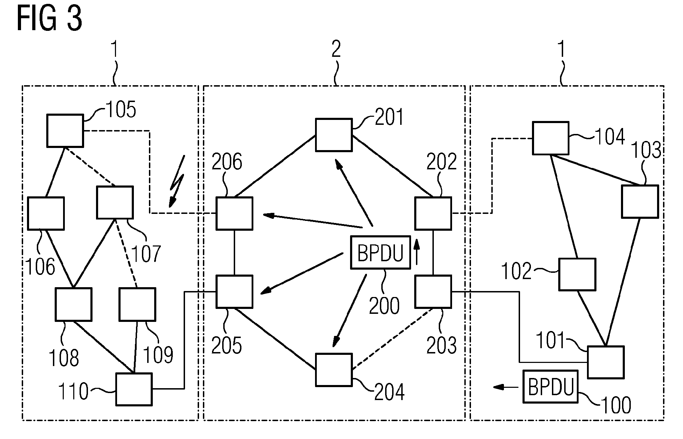

In einem fehlerfreien Verbindungszustand sind zur Vermeidung von Schleifenverbindungen entsprechend Figur 1 die Verbindungen zwischen den Kommunikationsgeräten 103 und 104, 104 und 202, 203 und 204, 106 und 108, 107 und 108 sowie 107 und 109 deaktiviert. Bei einem in Figur 2 dargestellten Verbindungsfehler im zweiten Teilnetz 2 zwischen den Kommunikationsgeräten 201 und 202 wird entsprechend dem im zweiten Teilnetz 2 angewendeten Ringredundanz-Protokoll die Verbindung zwischen den Kommunikationsgeräten 203 und 204 aktiviert, ohne daß dies Auswirkungen auf das erste Teilnetz 1 hat. In entsprechender Weise hat auch ein in Figur 3 dargestellter Verbindungsfehler zwischen den Kommunikationsgeräten 206 und 105 keine weitreichenden Konsequenzen auf das zweite Teilnetz 2. Zur Fehlerbehandlung bleibt nämlich lediglich entsprechend dem im ersten Teilnetz 1 verwendeten Spannbaum-Protokoll die Verbindung zwischen den Kommunikationsgeräten 205 und 110 aktiviert, ohne daß dies Auswirkungen auf die übrigen Kommunikationsgeräte 201-204, 206 hat. Weitere Fehlerbehandlungsmaßnahmen, nämlich eine Aktivierung der Verbindungen zwischen den Kommunikationsgeräten 106 und 108 sowie 107 und 108 und eine Deaktivierung der Verbindung zwischen den Kommunikationsgeräten 105 und 107, bleiben auf das erste Teilnetz 1 beschränkt. Eine Fehlerbehandlung kann also grundsätzlich immer im direkt von einem Fehler oder einer Störung betroffenen Teilnetz auf Basis eines dort verwendeten Kommunikationsprotokolls erfolgen.

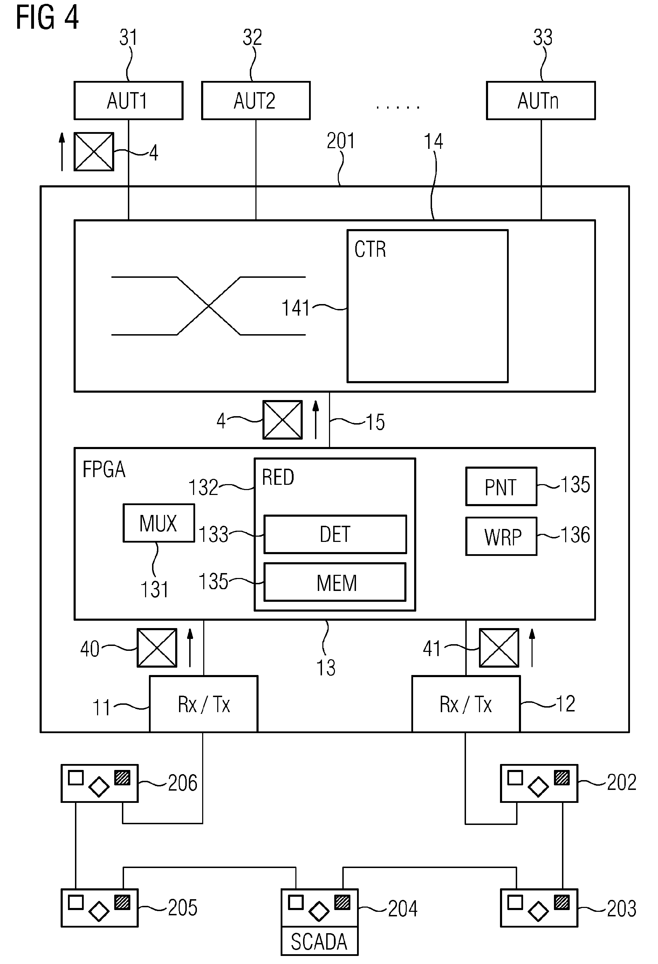

In Figur 4 ist ein Kommunikationsgerät 201, das einem Netzknoten des zweiten Teilnetzes 2 zugeordnet ist und in einer Ringstruktur mit weiteren Kommunikationsgeräten 202-206 verbunden ist, näher dargestellt. Grundsätzlich können auch die übrigen Kommunikationsgeräte 202-206 des zweiten Teilnetzes 2 identisch aufgebaut sein. Ein Kommunikationsgerät 204 kann beispielsweise einem SCADA-System (supervisory control and data acquisition) eines industriellen Fertigungs- oder Prozeßautomatisierungssystems zugeordnet sein.

Als Mittel zur Nachrichtenübermittlung innerhalb des zweiten Teilnetzes umfaßt das Kommunikationsgerät 201 zumindest eine erste 11 und zweite Sende- und Empfangseinheit 12, eine Signalverarbeitungseinheit 13 mit einer Multiplexereinheit 131 und einer Redundanzbehandlungseinheit 132 sowie ein mit der Signalverarbeitungseinheit 13 verbundenes Koppelelement 14. Beide Sende- und Empfangseinheiten 11, 12 weisen eine identische Netzadresse und einen identischen MAC-Geräteidentifikator auf. Bei Verwendung einer PC-basierten Lösung mit zwei Kommunikationsnetzerweiterungskarten können diese jedoch unterschiedliche MAC-Adressen aufweisen. In diesem Fall wird eine der beiden MAC-Adressen von beiden Erweiterungskarten einheitlich für Sende- bzw. Empfangsvorgänge als gemeinsame MAC-Adresse verwendet.

Die Multiplexereinheit 131 dient zur parallelen Weiterleitung zu sendender Datenpakete an beide Sendeeinheiten 11, 12, während die Redundanzbehandlungseinheit 132 zur Verarbeitung von beiden Empfangseinheiten 11, 12 empfangener Datenpakete 40, 41 vorgesehen ist. Die Redundanzbehandlungseinheit 132 umfaßt außerdem eine Filtereinheit 133, die für eine Detektion empfangener redundanter Datenpakete eingerichtet ist.

Die Signalverarbeitungseinheit ist im vorliegenden Ausführungsbeispiel mittels eines Field Programmable Gate Arrays (FPGA) realisiert. Das Koppelelement 14 ist ein Backplane Switch mit zugeordnetem Controller und verbindet mehrere Automatisierungsgeräte 31-33 mit der Signalverarbeitungseinheit 13. Des weiteren ist das Koppelelement 14 über jeweils einen Interlink-Anschluß mit den Automatisierungsgeräten 31-33 verbunden. Die Signalverarbeitungseinheit 13 weist eine Speichereinheit 135 auf, in der eine Tabelle (proxy node table) mit Angaben zu sämtlichen mit dem Koppelelement 14 verbundenen Automatisierungsgeräten 31-33 gespeichert ist.

Als Mittel zum Austauschen von Nachrichten 200 mit Topologieinformationen des ersten Teilnetzes 1 entsprechend dem Ringredundanz-Protokoll umfaßt das in Figur 4 dargestellte Kommunikationsgerät 201 die erste 11 und zweite Sende- und Empfangseinheit 12, die Signalverarbeitungseinheit 13, das Koppelelement 14 und einen der Signalverarbeitungseinheit zugeordneten Protokoll-Wrapper 136. Darüber hinaus ist die Signalverarbeitungseinheit 13 zum Vergleichen von ausgetauschten Nachrichten 200 mit Topologieinformationen des ersten Teilnetzes 1 mit lokal im Kommunikationsgerät 201 vorliegenden Topologieinformationen vorgesehen. Außerdem ist Signalverarbeitungseinheit 13 im vorliegenden Ausführungsbeispiel für Ermitteln von resultierenden Topologieinformationen des ersten Teilnetzes 1 in Abhängigkeit von einem Vergleichsergebnis ausgestaltet und eingerichtet.

Darüber hinaus ist der Controller 141 des Koppelelements 14 vorteilhafterweise zur Konfigurationsanpassung des Kommunikationsgeräts 201 hinsichtlich geschlossener bzw. geöffneter Verbindungen zum ersten Teilnetz 1 vorgesehen. Die Konfigurationsanpassung erfolgt dabei anhand der ermittelten resultierenden Topologieinformationen des ersten Teilnetzes 1.

Das Kommunikationsgerät 201 ist vorzugsweise für eine Nachrichtenübermittlung sowohl entsprechend dem High-availability Seamless Redundancy-Protokoll als auch entsprechend dem Media Redundancy Protocol eingerichtet. Für eine Nachrichtenübermittlung entsprechend dem High-availability Seamless Redundancy-Protokoll umfaßt die Redundanzbehandlungseinheit 132 eine Speichereinheit 134, die für eine Speicherung von Sequenznummern bereits fehlerfrei empfangener Nachrichten eingerichtet ist. Damit kann die Redundanzbehandlungseinheit 13 bei Empfang einer neuen Nachricht deren Sequenznummer auf Übereinstimmung mit einer bereits gespeicherten Sequenznummer überprüfen und ggf. redundante Nachrichten verwerfen, die durch eine einheitliche Sequenznummer gekennzeichnet und dementsprechend detektierbar sind.

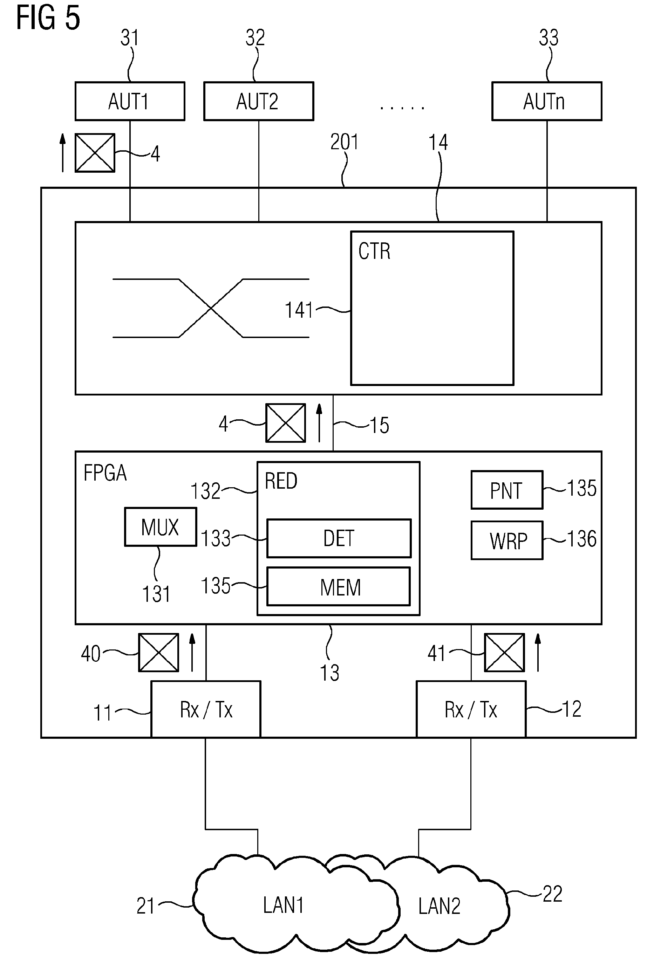

Die Merkmale der vorangehend beschriebenen Ausführungsbeispiele können sowohl einzeln als auch in beschriebener Kombination miteinander realisiert sein. Insbesondere ist eine Anwendung der vorliegenden Erfindung nicht auf ein zweites Teilnetz beschränkt, in dem ein Ringredundanz-Protokoll verwendet wird, sondern obige Ausführungen gelten in analoger Weise auch für ein zweites Teilnetz, in dem ein Parallelredundanz-Protokoll wie das Parallel Redundancy Protocol angewendet wird. In Figur 5 ist beispielhaft ein Kommunikationsgerät 201 für ein zweites Teilnetz dargestellt, in dem das Parallel Redundancy Protocol verwendet wird. In diesem Fall umfaßt das zweite Teilnetz beispielsweise zwei zueinander redundante lokale Netze 21, 22, mit denen jeweils eine Sende- und Empfangseinheit 11, 12 des in Figur 5 dargestellten Kommunikationsgeräts 201 verbunden ist, das im übrigen entsprechende Komponenten wie das in Figur 4 dargestellte Kommunikationsgerät 201 umfaßt. Hierzu zählen insbesondere eine Signalverarbeitungseinheit 13 mit Multiplexereinheit 131, Redundanzbehandlungseinheit 132, Speichereinheit 135 für eine proxy node table und Protokoll-Wrapper 135 sowie ein Koppelelement 14 mit einem zugeordneten Controller. Hinsichtlich ihrer Funktionalität entsprechen diese Komponenten übertragen auf das Parallel Redundancy Protocol denen des in Figur 4 dargestellten Kommunikationsgeräts.

## Patentansprüche

1. Verfahren zur Nachrichtenübermittlung in einem redundant betreibbaren industriellen Kommunikationsnetz, bei dem
- Nachrichten in einem ersten Teilnetz (1) mit Baumtopologie entsprechend einem Spannbaum-Protokoll übermittelt werden, wobei Netzknoten des ersten Teilnetzes zugeordnete Kommunikationsgeräte (101-110) zur Bildung einer Baumtopologie untereinander Nachrichten (100) mit Topologieinformationen austauschen und anhand der ausgetauschten Topologieinformationen ein Wurzel-Netzknoten als Basiselement einer Baumtopologie durch die den Netzknoten des ersten Teilnetzes zugeordneten Kommunikationsgeräte (101-110) ermittelt wird, und wobei vom Wurzel-Netzknoten ausgehend schleifenfreie Verbindungen zu den übrigen Netzknoten des ersten Teilnetzes (1) aufgebaut werden,
- Nachrichten in einem zweiten Teilnetz (2) entsprechend einem Parallel- oder Ringredundanz-Protokoll übermittelt werden,
- das erste und zweite Teilnetz (1, 2) über eine Mehrzahl von Kommunikationsgeräten (101, 104, 105, 110; 202, 203, 205, 206) miteinander gekoppelt sind,
- Netzknoten des zweiten Teilnetzes (2) zugeordnete Kommunikationsgeräte (201-206) untereinander Nachrichten (200) mit Topologieinformationen des ersten Teilnetzes (1) untereinander entsprechend dem Parallel- oder Ringredundanz-Protokoll austauschen, mit lokal vorliegenden Topologieinformationen des ersten Teilnetzes (1) vergleichen und in Abhängigkeit von einem Vergleichsergebnis resultierende Topologieinformationen des ersten Teilnetzes (1) ermitteln, wobei die resultierende Topologieinformationen des ersten Teilnetzes (1) durch sämtliche den Netzknoten des zweiten Teilnetzes (2) zugeordnete Kommunikationsgeräte (201-206) einheitlich ermittelt werden,
- die den Netzknoten des zweiten Teilnetzes (2) zugeordneten Kommunikationsgeräte (201-206) anhand der ermittelten resultierenden Topologieinformationen des ersten Teilnetzes (1) ihre Konfiguration hinsichtlich geschlossener und/oder geöffneter Verbindungen zum ersten Teilnetz (1) anpassen,
- durch die den Netzknoten des zweiten Teilnetzes (2) zugeordneten Kommunikationsgeräte (201-206) einheitliche resultierende Topologieinformationen zur Anwendung des Spannbaum-Protokolls im ersten Teilnetz (1) bereitgestellt werden.

2. Verfahren nach Anspruch 1,
bei dem die Topologieinformationen des ersten Teilnetzes Angaben zu bestehenden Verbindungen zwischen Netzknoten des ersten Teilnetzes umfassen, und bei dem vom Wurzel-Netzknoten ausgehende schleifenfreie Verbindungen zu den übrigen Netzknoten des ersten Teilnetzes anhand einer Ermittlung minimaler Pfadkosten zum Wurzel-Netzknoten aufgebaut werden.

3. Verfahren nach einem der Ansprüche 1 oder 2,
bei dem Nachrichten zwischen den Netzknoten des zweiten Teilnetzes zugeordneten Kommunikationsgeräten ausschließlich entsprechend dem Parallel- oder Ringredundanz-Protokoll übermittelt werden.

4. Verfahren nach einem der Ansprüche 1 bis 3,
das zweite Teilnetz für eine Anwendung des Spannbaum-Protokolls im ersten Teilnetz durch ein einzelnes Netzknoten miteinander verbindendes Kommunikationsgerät im ersten Teilnetz repräsentiert wird.

5. Verfahren nach einem der Ansprüche 1 bis 4,
bei dem das Spannbaum-Protokoll das Spanning Tree Protocol, Rapid Spanning Tree Protocol oder Multiple Spanning Tree Protocol ist.

6. Verfahren nach Anspruch 5,
bei dem die Nachrichten mit Topologieinformationen des ersten Teilnetzes Bridge Protocol Data Units sind.

7. Verfahren nach Anspruch 5 oder 6,
bei dem die Nachrichten mit Topologieinformationen des ersten Teilnetzes jeweils einen Port Priority Vector umfassen, der unter den Netzknoten des zweiten Teilnetzes zugeordneten Kommunikationsgeräten ausgetauscht und abgeglichen wird.

8. Verfahren nach einem der Ansprüche 1 bis 7,
bei dem die den Netzknoten des ersten und/oder zweiten Teilnetzes zugeordneten Kommunikationsgeräte Switches oder Bridges sind.

9. Verfahren nach einem der Ansprüche 1 bis 8,
bei dem das Parallel- oder Ringredundanz-Protokoll das Parallel Redundancy Protocol, High-availability Seamless Redundancy-Protokoll oder Media Redundancy Protocol ist.

10. Verfahren nach Anspruch 9,
bei dem das zweite Teilnetz eine Ringtopologie aufweist, und bei dem das Parallel- oder Ringredundanz-Protokoll das Highavailability Seamless Redundancy-Protokoll ist, und bei dem die den Netzknoten des zweiten Teilnetzes zugeordneten Kommunikationsgeräte jeweils zumindest eine erste und eine zweite Sende- und Empfangseinheit umfassen, die jeweils eine Schnittstelle für eine Netzverbindung des zweiten Teilnetzes aufweisen, wobei beide Sende- und Empfangseinheiten eine identische Netzadresse und einen identischen Geräteidentifikator aufweisen, und bei dem mit den ersten und zweiten Sende- und Empfangseinheiten jeweils eine Signalverarbeitungseinheit verbunden ist, die zu sendende Nachrichten parallel an beide Sendeeinheiten weiterleitet und von den Empfangseinheiten empfangene redundante Nachrichten detektiert, und bei dem mit den Signalverarbeitungseinheiten jeweils ein Koppelelement verbunden ist, über das ein einfach angebundener Netzknoten oder ein redundanzfreies Teilnetz mit der Signalverarbeitungseinheit verbunden ist.

11. Verfahren nach Anspruch 10,
bei dem zueinander redundante Nachrichten durch eine einheitliche Sequenznummer gekennzeichnet werden, und bei dem in einer der Signalverarbeitungseinheit zugeordneten Speichereinheit Sequenznummern von bereits fehlerfrei empfangenen Nachrichten gespeichert werden, und bei dem die Signalverarbeitungseinheit bei Empfang einer neuen Nachricht dessen Sequenznummer auf Übereinstimmung mit einer bereits gespeicherten Sequenznummer überprüft.

12. Verfahren nach Anspruch 9,
bei dem das zweite Teilnetz eine Ringtopologie aufweist, und bei dem das Parallel- oder Ringredundanz-Protokoll das Media Redundancy Protocol ist, und bei dem im zweiten Teilnetz ein Kommunikationsgerät als Überwachungs- und Steuerungseinheit konfiguriert ist, die eine Unterbrechung innerhalb der Ringtopologie anhand versendeter Test-Datenpakete detektiert und eine Weiterleitung von Datenpaketen mit Nutzdaten, die an einen ersten Anschluß des als Überwachungs- und Steuerungseinheit konfigurierten Kommunikationsgeräts gerichtet sind, an einen zweiten Anschluß dieses Kommunikationsgeräts steuert.

13. Kommunikationsgerät für ein redundant betreibbares industrielles Kommunikationsnetz, das ein erstes Teilnetz (1) mit Baumtopologie sowie Nachrichtenübermittlung entsprechend einem Spannbaum-Protokoll, ein zweites Teilnetz (2) mit Nachrichtenübermittlung entsprechend einem Parallel- oder Ringredundanz-Protokoll und eine Mehrzahl beide Teilnetze koppelnder Kommunikationsgeräte (101, 104, 105, 110; 202, 203, 205, 206) umfaßt, mit
- Mitteln zur Nachrichtenübermittlung (11, 12) innerhalb des zweiten Teilnetzes (2) entsprechend dem Parallel- oder Ringredundanz-Protokoll,
- Mitteln (11, 12) zum Austauschen von Nachrichten (100) mit Topologieinformationen des ersten Teilnetzes (1) mit Netzknoten des zweiten Teilnetzes (2) zugeordneten weiteren Kommunikationsgeräten (201-206) entsprechend dem Parallel- oder Ringredundanz-Protokoll, wobei die Topologieinformationen für eine Ermittlung eines Wurzel-Netzknotens als Basiselement der Baumtopologie vorgesehen sind, und wobei der Wurzel-Netzknoten einen Ausgangspunkt für einen Aufbau schleifenfreier Verbindungen zu den übrigen Netzknoten des ersten Teilnetzes (1) bildet,
- Mitteln (13) zum Vergleichen von ausgetauschten Nachrichten (100) mit Topologieinformationen des ersten Teilnetzes (1) mit lokal vorliegenden Topologieinformationen des ersten Teilnetzes und zum innerhalb des zweiten Teilnetzes (2) einheitlichen Ermitteln von resultierenden Topologieinformationen des ersten Teilnetzes (1) in Abhängigkeit von einem Vergleichsergebnis, wobei durch die den Netzknoten des zweiten Teilnetzes (2) zugeordneten Kommunikationsgeräte (201-206) einheitliche resultierende Topologieinformationen zur Anwendung des Spannbaum-Protokolls im ersten Teilnetz (1) bereitgestellt sind,
- Mitteln (141) zur Konfigurationsanpassung des Kommunikationsgeräts hinsichtlich geschlossener und/oder geöffneter Verbindungen zum ersten Teilnetz (1) anhand der ermittelten resultierenden Topologieinformationen des ersten Teilnetzes (1).

14. Kommunikationsgerät nach Anspruch 13,
bei dem das Kommunikationsgerät für eine Nachrichtübermittlung innerhalb des zweiten Teilnetzes ausschließlich entsprechend dem Parallel- oder Ringredundanz-Protokoll eingerichtet ist.

15. Kommunikationsgerät nach einem der Ansprüche 13 oder 14,
bei dem das Spannbaum-Protokoll das Spanning Tree Protocol, Rapid Spanning Tree Protocol oder Multiple Spanning Tree Protocol ist.

16. Kommunikationsgerät nach Anspruch 15,
bei dem die Nachrichten mit Topologieinformationen des ersten Teilnetzes Bridge Protocol Data Units sind.

17. Kommunikationsgerät nach Anspruch 15 oder 16,
bei dem die Nachrichten mit Topologieinformationen jeweils einen unter den Netzknoten des zweiten Teilnetzes zugeordneten Kommunikationsgeräten ausgetauschten und abgeglichenen Port Priority Vector umfassen.

18. Kommunikationsgerät nach einem der Ansprüche 13 bis 17,
bei dem die den Netzknoten des ersten und/oder zweiten Teilnetzes zugeordneten Kommunikationsgeräte Switches oder Bridges sind.

19. Kommunikationsgerät nach einem der Ansprüche 13 bis 18, bei dem das Parallel- oder Ringredundanz-Protokoll das Parallel Redundancy Protocol, High-availability Seamless Redundancy-Protokoll oder Media Redundancy Protocol ist.

20. Kommunikationsgerät nach Anspruch 19,
bei dem das zweite Teilnetz eine Ringtopologie aufweist, und bei dem das Parallel- oder Ringredundanz-Protokoll Highavailability Seamless Redundancy-Protokoll ist, und bei dem die den Netzknoten des zweiten Teilnetzes zugeordneten Kommunikationsgeräte jeweils zumindest eine erste und eine zweite Sende- und Empfangseinheit umfassen, die jeweils eine Schnittstelle für eine Netzverbindung des zweiten Teilnetzes aufweisen, wobei beide Sende- und Empfangseinheiten eine identische Netzadresse und einen identischen Geräteidentifikator aufweisen, und bei dem mit den ersten und zweiten Sende- und Empfangseinheiten jeweils eine Signalverarbeitungseinheit verbunden ist, und bei dem die Signalverarbeitungseinheit eine Multiplexereinheit zur parallelen Weiterleitung zu sendender Nachrichten an beide Sendeeinheiten und eine Redundanzbehandlungseinheit zur Verarbeitung von beiden Empfangseinheiten empfangener Nachrichten aufweist, wobei die Redundanzbehandlungseinheit eine Filtereinheit umfaßt, die für eine Detektion empfangener redundanter Nachrichten eingerichtet ist, und bei dem mit den Signalverarbeitungseinheiten jeweils ein Koppelelement verbunden ist, über das ein einfach angebundener Netzknoten oder ein redundanzfreies Teilnetz mit der Signalverarbeitungseinheit verbunden ist.

21. Kommunikationsgerät nach Anspruch 20,
bei dem zueinander redundante Nachrichten durch eine einheitliche Sequenznummer gekennzeichnet sind, und bei dem der Signalverarbeitungseinheit eine Speichereinheit zugeordnet ist, die für eine Speicherung von Sequenznummern bereits fehlerfrei empfangener Nachrichten eingerichtet ist, und bei dem die Redundanzbehandlungseinheit für eine Überprüfung auf eine bereits gespeicherte Sequenznummer bei Empfang einer neuen Nachricht eingerichtet ist.

## Claims

1. Method for transmitting messages in an industrial communication network which can be redundantly operated, in which
- messages are transmitted in a first subnetwork (1) with a tree topology in accordance with a spanning tree protocol, communication devices (101-110) associated with network nodes of the first subnetwork interchanging messages (100) containing topology information with one another in order to form a tree topology, and a root network node being determined as the basic element of a tree topology by the communication devices (101-110) associated with the network nodes of the first subnetwork on the basis of the interchanged topology information, and loop-free connections being set up from the root network node to the remaining network nodes of the first subnetwork (1),
- messages are transmitted in a second subnetwork (2) in accordance with a parallel or ring redundancy protocol,
- the first and second subnetworks (1, 2) are coupled to one another via a plurality of communication devices (101, 104, 105, 110, 202, 203, 205, 206),
- communication devices (201-206) associated with network nodes of the second subnetwork (2) interchange messages (200) containing topology information for the first subnetwork (1) with one another in accordance with the parallel or ring redundancy protocol, compare said messages with locally available topology information for the first subnetwork (1) and determine resultant topology information for the first subnetwork (1) on the basis of a comparison result,
- the resultant topology information for the first subnetwork (1) being consistently determined by all communication devices (201-206) associated with the network nodes of the second subnetwork (2),
- the communication devices (201-206) associated with the network nodes of the second subnetwork (2) use the determined resultant topology information for the first subnetwork (1) to adapt their configuration with respect to closed and/or open connections to the first subnetwork (1),
- the communication devices (201-206) associated with the network nodes of the second subnetwork (2) provide consistent resultant topology information for use of the spanning tree protocol in the first subnetwork (1).

2. Method according to Claim 1,
in which the topology information for the first subnetwork comprises details of existing connections between network nodes of the first subnetwork, and in which loop-free connections from the root network node to the remaining network nodes of the first subnetwork are set up using a determination of minimum path costs to the root network node.

3. Method according to either of Claims 1 and 2,
in which messages are transmitted between communication devices associated with the network nodes of the second subnetwork only in accordance with the parallel or ring redundancy protocol.

4. Method according to one of Claims 1 to 3,
in which the second subnetwork, for use of the spanning tree protocol in the first subnetwork, is represented by an individual communication device which connects network nodes to one another in the first subnetwork.

5. Method according to one of Claims 1 to 4,
in which the spanning tree protocol is the rapid spanning tree protocol or the multiple spanning tree protocol.

6. Method according to Claim 5,
in which the messages containing topology information for the first subnetwork are bridge protocol data units.

7. Method according to Claim 5 or 6,
in which the messages containing topology information for the first subnetwork each comprise a port priority vector which is interchanged and compared among communication devices associated with the network nodes of the second subnetwork.

8. Method according to one of Claims 1 to 7,
in which the communication devices associated with the network nodes of the first and/or second subnetwork are switches or bridges.

9. Method according to one of Claims 1 to 8,
in which the parallel or ring redundancy protocol is the parallel redundancy protocol, the high-availability seamless redundancy protocol or the media redundancy protocol.

10. Method according to Claim 9,
in which the second subnetwork has a ring topology, and in which the parallel or ring redundancy protocol is the high-availability seamless redundancy protocol, and in which the communication devices associated with the network nodes of the second subnetwork each comprise at least one first transmitting and receiving unit and one second transmitting and receiving unit each having an interface for a network connection of the second subnetwork, both transmitting and receiving units having an identical network address and an identical device identifier, and in which a signal processing unit is connected to each of the first and second transmitting and receiving units, which signal processing unit forwards messages to be transmitted to both transmitting units in a parallel manner and detects redundant messages received by the receiving units, and in which a coupling element is connected to each of the signal processing units and is used to connect a simply connected network node or a redundancy-free subnetwork to the signal processing unit.

11. Method according to Claim 10,
in which messages which are redundant with respect to one another are identified by a consistent sequence number, and in which sequence numbers of messages which have already been received in an error-free manner are stored in a memory unit associated with the signal processing unit, and in which the signal processing unit, upon receiving a new message, checks its sequence number for a match with a sequence number which has already been stored.

12. Method according to Claim 9,
in which the second subnetwork has a ring topology, and in which the parallel or ring redundancy protocol is the media redundancy protocol, and in which a communication device in the second subnetwork is configured as a monitoring and control unit which detects an interruption inside the ring topology using transmitted test data packets and controls forwarding of data packets containing useful data, which are addressed to a first terminal connection of the communication device configured as a monitoring and control unit, to a second terminal connection of this communication device.

13. Communication device for an industrial communication network which can be redundantly operated and comprises a first subnetwork (1) with a tree topology and message transmission in accordance with a spanning tree protocol, a second subnetwork (2) with message transmission in accordance with a parallel or ring redundancy protocol and a plurality of communication devices (101, 104, 105, 110; 202, 203, 205, 206) which couple both subnetworks, having
- means for transmitting messages (11, 12) inside the second subnetwork (2) in accordance with the parallel or ring redundancy protocol,
- means (11, 12) for interchanging messages (100) containing topology information for the first subnetwork (1) with further communication devices (201-206) associated with network nodes of the second subnetwork (2) in accordance with the parallel or ring redundancy protocol, the topology information being intended to determine a root network node as the basic element of the tree topology, and the root network node forming a starting point for setting up loop-free connections to the remaining network nodes of the first subnetwork (1),
- means (13) for comparing interchanged messages (100) containing topology information for the first subnetwork (1) with locally available topology information for the first subnetwork and for consistently determining resultant topology information inside the second subnetwork (2) for the first subnetwork (1) on the basis of a comparison result,
- the communication devices (201-206) associated with the network nodes of the second subnetwork (2) providing consistent resultant topology information for use of the spanning tree protocol in the first subnetwork (1),
- means (141) for adapting the configuration of the communication device with regard to closed and/or open connections to the first subnetwork (1) using the determined resultant topology information for the first subnetwork (1).

14. Communication device according to Claim 13,
in which the communication device is set up to transmit messages inside the second subnetwork solely in accordance with the parallel or ring redundancy protocol.

15. Communication device according to either of Claims 13 and 14,
in which the spanning tree protocol is the rapid spanning tree protocol or the multiple spanning tree protocol.

16. Communication device according to Claim 15,
in which the messages containing topology information for the first subnetwork are bridge protocol data units.

17. Communication device according to Claim 15 or 16,
in which the messages containing topology information each comprise a port priority vector which is interchanged and compared among communication devices associated with the network nodes of the second subnetwork.

18. Communication device according to one of Claims 13 to 17, in which the communication devices associated with the network nodes of the first and/or second subnetwork are switches or bridges.

19. Communication device according to one of Claims 13 to 18, in which the parallel or ring redundancy protocol is the parallel redundancy protocol, the high-availability seamless redundancy protocol or the media redundancy protocol.

20. Communication device according to Claim 19,
in which the second subnetwork has a ring topology, and in which the parallel or ring redundancy protocol is the high-availability seamless redundancy protocol, and in which the communication devices associated with the network nodes of the second subnetwork each comprise at least one first transmitting and receiving unit and one second transmitting and receiving unit each having an interface for a network connection of the second subnetwork, both transmitting and receiving units having an identical network address and an identical device identifier, and in which a signal processing unit is connected to each of the first and second transmitting and receiving units, and in which the signal processing unit has a multiplexer unit for forwarding messages to be transmitted to both transmitting units in a parallel manner and a redundancy handling unit for processing messages received by both receiving units, the redundancy handling unit comprising a filter unit which is set up to detect received redundant messages, and in which a coupling element is connected to each of the signal processing units and is used to connect a simply connected network node or a redundancy-free subnetwork to the signal processing unit.

21. Communication device according to Claim 20,
in which messages which are redundant with respect to one another are identified by a consistent sequence number, and in which the signal processing unit is associated with a memory unit which is set up to store sequence numbers of messages which have already been received in an error-free manner, and in which the redundancy handling unit is set up to check for a sequence number which has already been stored when a new message is received.

## Revendications

1. Procédé de transmission de messages dans un réseau de communication industriel pouvant fonctionner de manière redondante, dans lequel
- on transmet des messages dans un premier réseau (1) partiel à topologie arborescente conformément à un protocole d'arborescence spann, dans lequel des appareils (101 à 110) de communication affectés à des noeuds du premier réseau partiel échangent pour la formation d'une topologie arborescente entre eux des messages (100) ayant des informations de topologie et, à l'aide des informations de topologie échangées, il est déterminé un noeud de réseau racine comme élément de base d'une topologie arborescente par les appareils (101 à 110) de communication affectés aux noeuds du premier réseau partiel et dans lequel, en partant du noeud de réseau racine, on forme des liaisons sans boucle allant vers les autres noeuds du premier réseau (1) partiel,
- on transmet des messages dans un deuxième réseau (2) partiel conformément à un protocole redondant, en parallèle ou en anneau,
- on couple l'un à l'autre le premier et le deuxième réseaux (1, 2) partiels par une pluralité d'appareils (101, 104, 105, 110, 202, 203, 205, 206) de communication,
- des appareils (201 à 206) de communication affectés au noeud du deuxième réseau (2) échangent entre eux des messages (200) ayant des informations de topologie du premier réseau (1) partiel conformément au protocole redondant, en parallèle ou en anneau, les compare à des informations de topologie présentes localement du premier réseau (1) partiel et détermine, en fonction d'un résultat de comparaison, des informations de topologie résultantes du premier réseau (1) partiel, les informations de topologie résultantes du premier réseau (1) partiel étant déterminées unitairement par l'ensemble des appareils (201 à 206) de communication affectés aux noeuds du deuxième réseau (2) partiel,
- les appareils (201 à 206) de communication affectés aux noeuds du deuxième réseau (1) partiel adaptent, à l'aide des informations de topologie résultantes déterminées du premier réseau (1) partiel, leur configuration en ce qui concerne les liaisons fermées et/ou ouvertes allant vers le premier réseau (1) partiel,
- des informations de topologie résultantes unitaires sont mises à disposition par les appareils (201 à 206) de communication affectés aux noeuds du deuxième réseau (2) partiel pour l'utilisation du protocole arborescent spann dans le premier réseau (1) partiel.

2. Procédé suivant la revendication 1,
dans lequel les informations de topologie du premier réseau partiel comprennent des indications sur les liaisons existantes entre des noeuds du premier réseau partiel et dans lequel, en partant du noeud de réseau racine, on forme des liaisons sans boucle allant vers les autres noeuds du premier réseau partiel à l'aide d'une détermination du coût du trajet minimum allant vers le noeud de réseau racine.

3. Procédé suivant l'une des revendications 1 ou 2,
dans lequel des messages entre des appareils de communication affectés aux noeuds du deuxième réseau partiel sont transmis exclusivement, conformément au protocole redondant, en parallèle ou en anneau.

4. Procédé suivant l'une des revendications 1 à 3,
dans lequel le deuxième réseau partiel est, pour une utilisation du protocole arborescent spann, dans le premier réseau partiel, représenté par un seul appareil de communication du premier réseau partiel reliant entre eux des noeuds du réseau.

5. Procédé suivant l'une des revendications 1 à 4,
dans lequel le protocole arborescent spann est le protocole Spanning Tree, le protocole Rapid Spanning Tree ou le protocole Multiple Spanning Tree.

6. Procédé suivant la revendication 5,
dans lequel les messages ayant des informations de topologie du premier réseau partiel sont des Bridge Protocol Data Units.

7. Procédé suivant la revendication 5 ou 6,
dans lequel les messages ayant des informations de topologie du premier réseau partiel comprennent respectivement un Port Priority Vector, qui est échangé et équilibré entre les appareils de communication affectés aux noeuds du deuxième réseau partiel.

8. Procédé suivant l'une des revendications 1 à 7,
dans lequel les appareils de communication affectés aux noeuds du premier et/ou du deuxième réseau partiel sont des switches ou des bridges.

9. Procédé suivant l'une des revendications 1 à 8,
dans lequel le protocole redondant en parallèle ou en anneau, est le protocole Parallel Redundancy, le protocole High-availability Seamless Redundancy ou le protocole Media Redundancy.

10. Procédé suivant la revendication 9,
dans lequel le deuxième réseau partiel a une topologie en anneau, et dans lequel le protocole redondant, en parallèle ou en anneau, est le protocole High-availability Seamless Redundancy et dans lequel les appareils de communication affectés aux noeuds du deuxième réseau partiel comprennent respectivement au moins une première et une deuxième unités d'émission et de réception, qui ont chacune une interface pour une liaison du deuxième réseau partiel, les deux unités d'émission et de réception ayant une adresse de réseau identique et un identificateur d'appareil identique, et dans lequel à la première et à la deuxième unités d'émission et de réception est reliée respectivement une unité de traitement du signal, qui achemine les messages à envoyer en parallèle aux deux unités d'émission et qui détecte des messages redondants reçus par les deux unités de réception et dans lequel, aux unités de traitement du signal, est relié respectivement un élément de couplage, par lequel un noeud du réseau relié simplement ou un réseau partiel sans redondance est relié à l'unité de traitement du signal.

11. Procédé suivant la revendication 10,
dans lequel des messages redondants entre eux sont **caractérisés par** un numéro de séquence unitaire et dans lequel, dans une unité de mémorisation affectée à l'unité de traitement du signal, des numéros de séquence de messages déjà reçus sans erreur sont mémorisés et dans lequel l'unité de traitement du signal contrôle à la réception d'un message nouveau son numéro de séquence pour savoir s'il coïncide avec un numéro de séquence déjà mémorisé.

12. Procédé suivant la revendication 9,
dans lequel le deuxième réseau partiel a une topologie en anneau et dans lequel le protocole redondant, en parallèle ou en anneau, est le protocole Media Redundancy et dans lequel, dans le deuxième réseau partiel, un appareil de communication est configuré en unité de contrôle et de commande, qui détecte une interruption au sein de la topologie en anneau, au moyen de paquets de données de test envoyés, et commande un acheminement de paquets de données ayant des données utiles, qui sont dérivés sur un premier accès de l'appareil de communication configuré en unité de contrôle et de commande vers un deuxième accès de cet appareil de communication.

13. Appareil de communication pour un réseau de communication industriel pouvant fonctionner de manière redondante et comprenant un premier réseau (1) partiel à topologie arborescente ainsi qu'à transmission de messages conformément au protocole arborescent spann, un deuxième réseau (2) partiel à transmission de messages conformément à un protocole redondant, en parallèle ou en anneau, et une pluralité d'appareils (101, 104, 105, 110, 202, 203, 205, 206) de communication se couplant aux deux réseaux partiels, comprenant
- des moyens de transmission (11, 12) de messages dans le deuxième réseau (2) partiel conformément au protocole redondant, en parallèle ou en anneau,
- des moyens (11, 12) d'échange de messages (100) ayant des informations de topologie du premier réseau (1) avec d'autres appareils (201 à 206) de communication affectés à des noeuds du deuxième réseau (2) partiel conformément au protocole redondant, en parallèle ou en anneau, les informations de topologie étant prévues pour une détermination d'un noeud de réseau racine comme élément de base de la topologie arborescente et le noeud de réseau racine formant un point de départ pour une formation de liaisons sans boucle vers les autres noeuds du premier réseau (1) partiel,
- des moyens (13) de comparaison de messages (100) échangés ayant des informations de topologie du premier réseau (1) partiel à des informations de topologie présentes localement du premier réseau partiel et de détermination unitaire dans le deuxième réseau (2) partiel d'informations de topologie résultantes du premier réseau (1) partiel en fonction d'un résultat de la comparaison, dans lequel des informations de topologie résultantes unitaires sont, pour l'utilisation du protocole arborescent spann dans le premier réseau (1) partiel, mises à disposition par les appareils (201 à 206) de communication affectés aux noeuds du deuxième réseau (2) partiel,
- des moyens (141) d'adaptation de configuration de l'appareil de communication en ce qui concerne des liaisons ouvertes/fermées allant au premier réseau (1) partiel à l'aide des informations de topologie résultantes déterminées du premier réseau (1) partiel.

14. Appareil de communication suivant la revendication 13,
dans lequel l'appareil de communication pour une transmission de messages est, dans le deuxième réseau partiel, conçu exclusivement conformément au protocole redondant, en parallèle ou en anneau.

15. Appareil de communication suivant l'une des revendications 13 ou 14,
dans lequel le protocole arborescent spann est le protocole Spanning Tree, le protocole Rapid Spanning Tree ou le protocole Multiple Spanning Tree.

16. Appareil de communication suivant la revendication 15,
dans lequel les messages ayant des informations de topologie du premier réseau partiel sont des Bridge Protocol Data Units.

17. Procédé suivant la revendication 15 ou 16,
dans lequel les messages ayant des informations de topologie comprennent chacun un Port Priority Vector échangé et équilibré entre les appareils de communication affectés aux noeuds du deuxième réseau partiel.

18. Appareil de communication suivant l'une des revendications 13 à 17,
dans lequel les appareils de communication affectés aux noeuds du premier et/ou du deuxième réseau partiel dont des switches ou des bridges.

19. Appareil de communication suivant l'une des revendications 13 à 18,
dans lequel le protocole redondant, en parallèle ou en anneau, est le protocole Parallel Redundancy, le protocole High-availability Seamless Redundancy ou le protocole Media Redundancy.

20. Appareil de communication suivant la revendication 19,
dans lequel le deuxième réseau partiel a une topologie en anneau et dans lequel le protocole redondant, en parallèle ou en anneau, est le protocole High-availability Seamless Redundancy et dans lequel les appareils de communication affectés aux noeuds du deuxième réseau partiel comprennent respectivement au moins une première et une deuxième unités d'émission et de réception, qui ont chacune une interface pour une liaison du deuxième réseau partiel, les deux unités d'émission et de réception ayant une adresse de réseau identique et un identificateur d'appareil identique et dans lequel à la première et à la deuxième unités d'émission et de réception est reliée respectivement une unité de traitement du signal, et dans lequel l'unité de traitement du signal a une unité de multiplexeur pour l'acheminement en parallèle de messages à envoyer aux deux unités d'émission et une unité de traitement de redondance pour le traitement de messages reçus par les deux unités de réception, l'unité de traitement de redondance comprenant une unité de filtrage, qui est conçue pour une détection de messages redondants reçus, et dans lequel, aux unités de traitement de signal, est relié respectivement un élément de couplage, par lequel un noeud de réseau relié simplement ou un réseau partiel sans redondance est relié à l'unité de traitement du signal.

21. Appareil de communication suivant la revendication 20,
dans lequel des messages redondants entre eux sont **caractérisés par** un numéro de séquence unitaire et, dans lequel il est affecté à l'unité de traitement du signal une unité de mémorisation, qui est conçue pour mémoriser des numéros de séquence de messages reçus déjà sans erreur, et dans lequel l'unité de traitement de redondance est conçue pour contrôler à la réception d'un nouveau message un numéro de séquence déjà mémorisé.
